# EUROPEAN PATENT SPECIFICATION

(11) **EP 0 922 016 B1**
(45) Date of publication and mention of the grant of the patent: **24.02.2010**
(21) Application number: 96932146.2
(22) Date of filing: 29.08.1996
(51) Int. Cl.: C06D 5/06, C06B 31/32

(54) **EUTECTIC MIXTURES OF AMMONIUM NITRATE AND AMINO GUANIDINE NITRATE**
EUTEKTISCHE MISCHUNGEN VON AMMONIUMNITRAT UND AMINOGUANIDIN-NITRAT
MELANGES EUTECTIQUES DE NITRATE D'AMMONIUM ET DE NITRATE D'AMINOGUANIDINE

(43) Date of publication of application: 16.06.1999
(73) Proprietor: ATLANTIC RESEARCH CORPORATION, Gainesville, Virginia 20155-1699 (US)
(72) Inventor: SCHEFFEE, Robert, S., Gainesville, VA 22065 (US); WHEATLEY, Brian, K., Gainesville, VA 22065 (US)
(74) Representative: Serin, Jean-Pierre
(86) International application number: PCT/US1996/013829
(87) International publication number: WO 1998/008783

(56) References cited:
- WO-A-95/04710
- WO-A-96/30716
- WO-A-97/46502
- DE-U- 9 416 112
- US-A- 2 142 886
- US-A- 4 632 714
- US-A- 4 722 757
- US-A- 4 948 438
- US-A- 5 071 630
- US-A- 5 407 226
- US-A- 5 411 615
- US-A- 5 451 277
- US-A- 5 531 941

## Description

### FIELD OF THE INVENTION

The present invention relates to a eutectic solution-forming mixture of ammonium nitrate (AN) and either aminoguanidine nitrate (AGN) or guanidine nitrate (GN) and optionally potassium nitrate (KN) that will generate a particulate-free, non-toxic, odorless and colorless gas, for various purposes, such as inflating a vehicle occupant restraint, i.e., an air bag for an automotive vehicle.

### BACKGROUND OF THE INVENTION

The present invention relates generally to solid composite propellant compositions and more particularly to solid composite propellant compositions useful as gas generators.

Recently, there has been a great demand for new gas generating propellants which are cool burning, non-corrosive and yield a high volume of gas and low solid particulates because attempts to improve existing gas generating compositions have been unsuccessful for various reasons. For example, while the addition of certain modifiers has lowered the flame temperature and increased gas production, these same modifiers have contributed to the production of undesirable corrosive products. In turn, other modifiers utilized in the past, while not producing corrosive materials, have not succeeded in lowering the flame temperature significantly or of increasing gas evolution.

The usual gas generator composition, known in gas generator technology as the "propellant", is comprised of ammonium nitrate oxidizer with rubbery binders or in pressed charges. Various chemicals such as guanidine nitrate, oxamide and melamine are used in the propellant to aid ignition, give smooth burning, modify burning rates and give lower flame temperatures.

Ammonium nitrate is the most commonly used oxidizer since it is exceptionally effective per unit weight and yields a non-toxic and non-corrosive exhaust at low flame temperatures. Further, it contributes to burning rates lower than those of other oxidizers. Ammonium nitrate is cheap, readily available and safe to handle. The main objection to ammonium nitrate is that it undergoes certain phase changes during temperature variations causing cracks and voids if any associated binder is not sufficiently strong and flexible to hold the composition together.

Ammonium nitrate compositions are hygroscopic and difficult to ignite, particularly if small amounts of moisture have been absorbed. Since said compositions do not sustain combustion at low pressures, various combustion catalysts are added to promote ignition and low pressure combustion as well as to achieve smooth, stable burning. Gas generator compositions used for air bags should contain no metallic additives or even oxidizers such as ammonium perchlorate, because these give erosive and corrosive exhaust gases respectively. Commonly used additives, such as ammonium dichromate, copper chromite, etc., are disadvantageous since they all produce solids in the exhaust gases.

Gas generator compositions are usually manufactured by a pressing or by an extruding and compression molding technique. The solid particles are formed and the composition is broken up into bits ("granulated") with appropriate granulator-type equipment.

After granulation, the composition is loaded into molds of the required shapes and pressed to about 7000 psi (4921 kg/cm²). With certain types of binder, the molds are heated to about 180°F (82°C) until the composition is cured or vulcanized. The grain is then potted into the gas generator cases. The molds, mills and extrusion equipment are costly; the lengthy process time further increases the cost of manufacture. It is especially difficult to produce large grains by this technique.

The art is replete with instances of compositions containing a guanidine-type compound together with an oxidizer, such as ammonium nitrate. For example, in U.S. Patent 3,031,347, guanidine nitrate and ammonium nitrate are listed together at column 2, as well as in Examples 3 and 5. However, compared with the present invention, not only does the guanidine compound lack an amino group, as in the aminoguanidine nitrate embodiment, but the composition disclosed in the patent is not a eutectic solution-forming mixture. Likewise, see U.S. Patent 3,739,574, col. 2, in the Table. On the other hand, U.S. Patent 3,845,970, at column 3, discloses a list of solid compositions for generating gas in a shock absorption system. Among the components of the various compositions are ammonium nitrate and aminoguanidine nitrate. The two materials are not disclosed in admixture and, obviously, are not in a eutectic composition.

Similarly, U.S. Patent 3,954,528, discloses new solid composite gas generating compositions. Among the ingredients mentioned are ammonium nitrate and triaminoguanidine nitrate. See Examples 2 through 5. However, neither the specific components of the aminoguanidine nitrate compositions at hand, nor any eutectic compositions, are disclosed therein.

In U.S. Patent 4,111,728, the inventor discloses ammonium nitrate with small amounts of guanidine nitrate. See column 2 and the table at columns 3-4. However, the compositions do not include aminoguanidine nitrate and do not characterize any composition as forming a eutectic solution.

U.S. Patent 5,125,684 also discloses propellant compositions containing dry aminoguanidine nitrate and an oxidizer salt containing a nitrate anion. However, the disclosure is deficient with respect to the present invention since it fails to disclose the specific combination of components of the present invention and does not mention eutectics.

Finally, U.S. Patent 5,336,439 concerns salt compositions and concentrates used in explosive emulsions. As disclosed at columns 37 and 38, ammonium nitrate is one of the ingredients for forming the patentee's composition, while at column 20, line 51, aminoguanidine is indicated as also being an appropriate component. Nevertheless, like the other disclosures mentioned, the patent fails to disclose a specific composition including the same nitrates as are disclosed herein and clearly does not teach a eutectic composition containing said components.

### SUMMARY OF THE INVENTION

The present invention involves eutectic mixtures of ammonium nitrate and guanidine nitrate (GN) or aminoguanidine nitrate, as well as a method of generating a particulate-free, non-toxic, odorless and colorless gas for various purposes, such as to inflate an air bag in an automotive vehicle. In generating a particulate-free, non-toxic, odorless and colorless gas, an enclosed pressure chamber having an exit port is provided; a solid eutectic solution comprising ammonium nitrate and either aminoguanidine nitrate or guanidine nitrate (GN) is disposed within said chamber; means are then provided for igniting said eutectic solution in response to a sudden deceleration being detected by a detection device in the pressure chamber, whereby gas is instantly generated and conducted through the exit port of the pressure chamber to accomplish a desired function, such as inflating an automotive vehicle air bag. In particular, the invention involves a composition as claimed in claim 1 to 11 and a method as claimed in claim 12 to 22.

Eutectic mixtures of ammonium nitrate and aminoguanidine nitrate or guanidine nitrate, it has been found, eliminate pellet cracking and substantially reduce ammonium nitrate phase change due to temperature cycling. Moreover, the addition of up to about 10% potassium nitrate (KN) to the noted eutectic stabilizes the ammonium nitrate (AN), totally eliminates the ammonium nitrate phase change and maintains the freedom from cracking of the pressed pellet upon temperature cycling

### DESCRIPTION OF THE PREFERRED EMBODIMENT

To achieve the-advantages of employing ammonium nitrate, e.g., low cost, availability and safety, while avoiding its drawbacks, e.g., cracks and voids in the pressed pellet when subjected to temperature cycling, it is proposed to mix the ammonium nitrate oxidizer with aminoguanidine nitrate or guanidine nitrate and then form a eutectic solution which avoids some of the problems previously encountered and discussed above. Thus, the provision of the ammonium nitrate/aminoguanidine nitrate or the AN/GN as a eutectic in the form of a pressed pellet provides a generator to produce a particulate-free, non-toxic, odorless, and colorless gas for inflating an air bag, but without the tendency of the pellet to crack and with reduced phase change of the AN due to temperature cycling. Also, to some degree, the hygroscopicity of the mixture is reduced. By the addition of small amounts of potassium nitrate, such as up to about 10% by weight, freedom from cracking of the pressed pellet upon temperature cycling is still maintained and the phase change of the AN is completely eliminated.

When equal parts of ammonium nitrate and aminoguanidine nitrate are melted together, a low-melting point solution is formed. The respective melting points are 169, 148 and 108°C for ammonium nitrate, aminoguanidine nitrate and the 50/50 mixture thereof, respectively.

When 33 grams of 50/50 ammonium nitrate/aminoguanidine nitrate are fixed with 159 grams of argon in a 60-mm (diameter) gas generator for a passenger side air bag, the pressure in a 60-liter tank is 84 psi (0.58 mPa). The effluent is particulate-free, non-toxic, odorless and colorless.

In addition, it has been discovered that the same eutectic employed to generate the gases may also be used as the igniter in the inflator device. By so utilizing the same eutectic for igniting the propellant, the inventors are able to eradicate the smoke that would otherwise be present in the exhaust. For the igniter load, the eutectic is provided as a powder, granulate, monolithic composite or any other form that may conveniently be disposed in the generator.

In some cases, small amounts (up to about 5% by weight) of polyvinyl alcohol (PVA), as binder, are employed in the foregoing compositions. WO-A-9504710 discloses gas generant compositions comprising phase stabilized ammonium nitrate, a guanidine derivative and a binder. Also, to increase the stabilization of the ammonium nitrate, up to about 5% by weight of zinc oxide (ZnO) may be added to the compositions. US-A-5071630 discloses zinc-phase-stabilized ammonium nitrate. By employing combinations of potassium nitrate and zinc oxide, one may achieve stability at temperatures up to 107°C.

### THE DRAWINGS

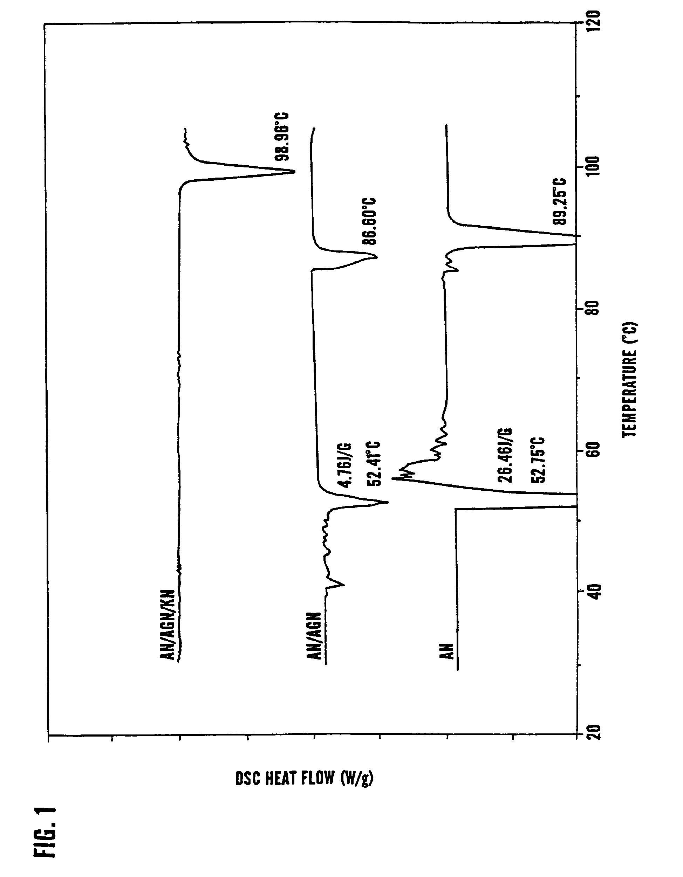

To demonstrate the effectiveness of the present propellant system, attention is invited to Fig. 1 of the present drawings, wherein DSC heat flow (W/g) produced by ammonium nitrate (AN) and ammonium nitrate/aminoguanidine nitrate eutectic (AN/AGN) and of a mixture of AN, AGN and potassium nitrate (KN) are compared. It will be observed that the three component composition provides a uniform heat flow up to 98.96°C. On the other hand, the two component composition dips sightly at 52.41°C and then continues to 86.60°C. The ammonium nitrate, by itself, exhibits a precipitous drop at 52.75°C, followed by a slight increase and a second drop at 89.25°C.

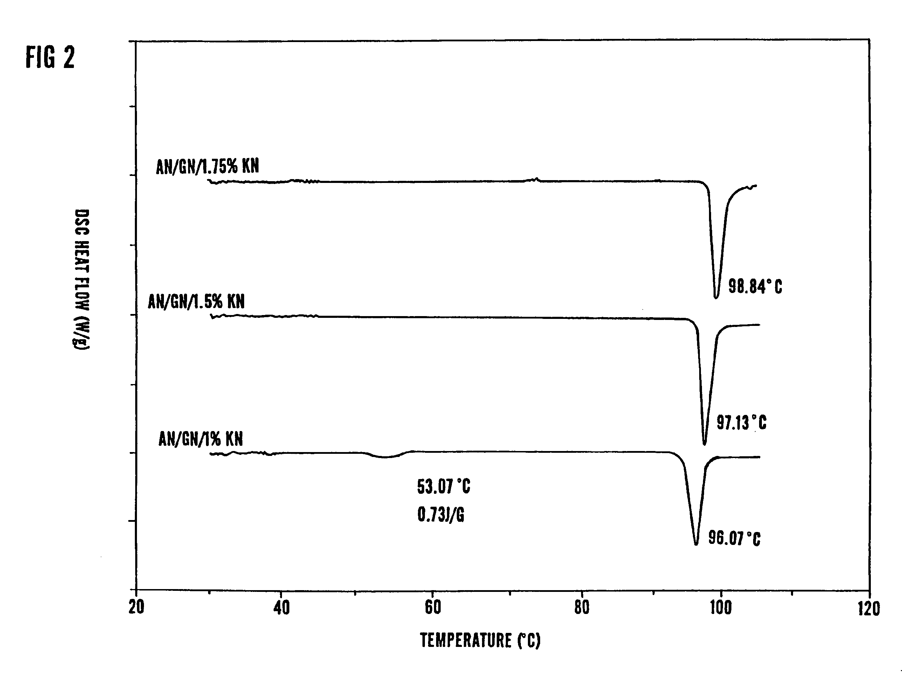

In Fig. 2, small variations in the concentration of potassium nitrate in AN/GN/KN compositions are compared. At 1% KN, the composition exhibits a small decline at 53.07°C and continues without any major variations until 96.07°C. On the other hand, when the concentration of potassium nitrate is increased to 1.5%, the heat flow continues at a constant rate until 97.13°C. By increasing the concentration of potassium nitrate to 1.75%, the inventors extend the uniform heat flow until 98.84°.

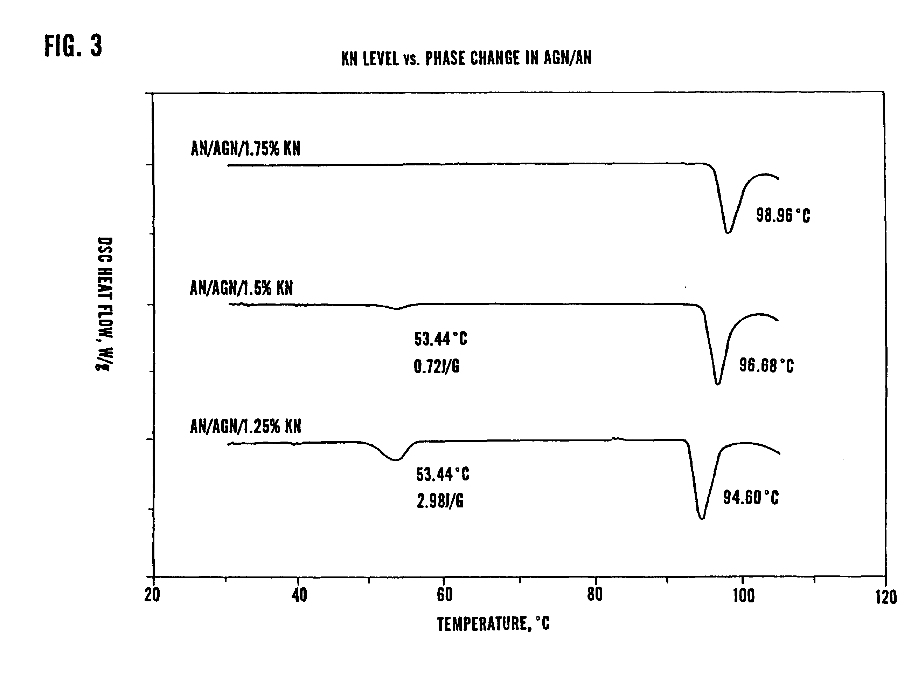

In a further comparison, similar to that shown in Fig. 2, but with AGN instead of GN, Fig. 3 shows essentially the same pattern of heat flow. Although greater differences are reported between compositions containing 1.75% KN, as opposed to compositions containing 1.5% KN and 1.25% KN, compared with the results in Fig. 2, the overall graph represents essentially the same type of data.

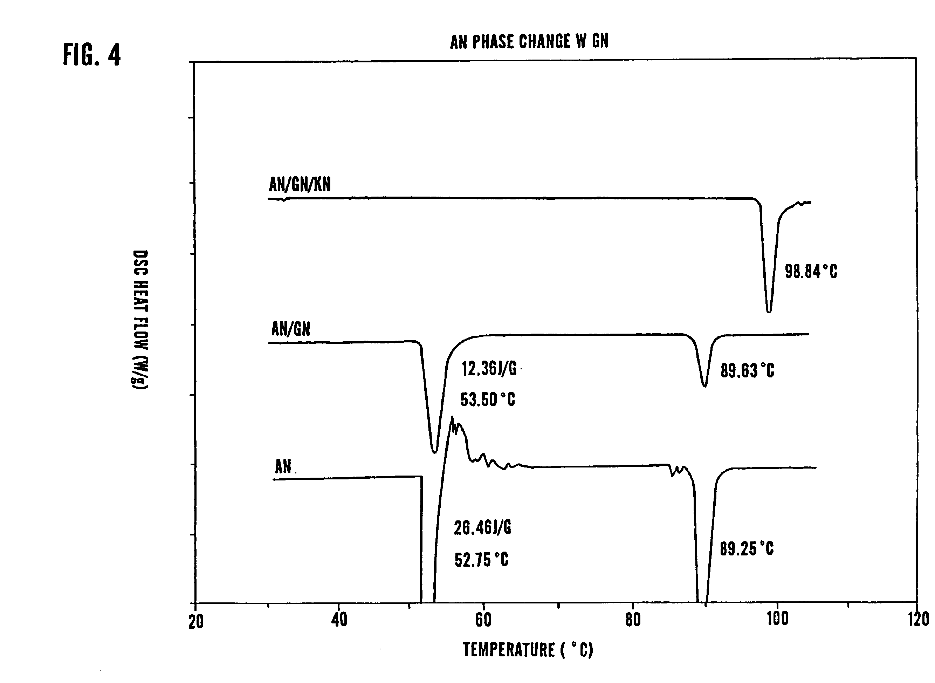

Fig. 4 represents a comparison like that of Fig. 1, but exemplifying the phase change of a guanidine nitrate/ammonium nitrate (GN/AN) composition, instead of an AGN/AN composition. Although the specific values for the depressions vary somewhat, the overall results follow the same pattern shown for the corresponding composition containing the aminoguanidine nitrate, instead of guanidine nitrate, as here.

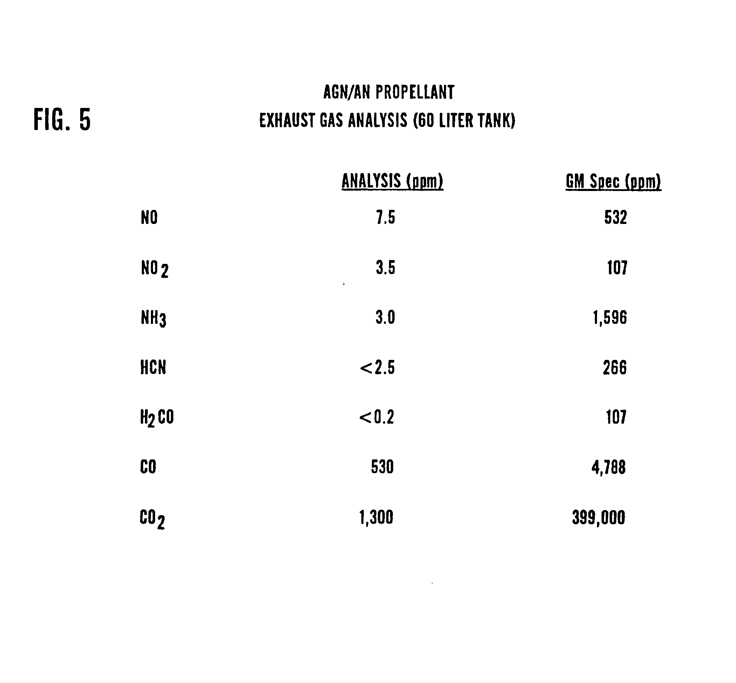

Fig. 5 provides an analysis of the exhaust gas provided by an aminoguanidine nitrate/ammonium nitrate propellant. The exhaust gas is collected in a 60 liter tank and indicates 1300 ppm of carbon dioxide, with a smaller amount of 530 ppm of carbon monoxide. The exhaust gas also contains small amounts of hydrogen cyanide, formaldehyde, ammonia and nitrogen oxides.

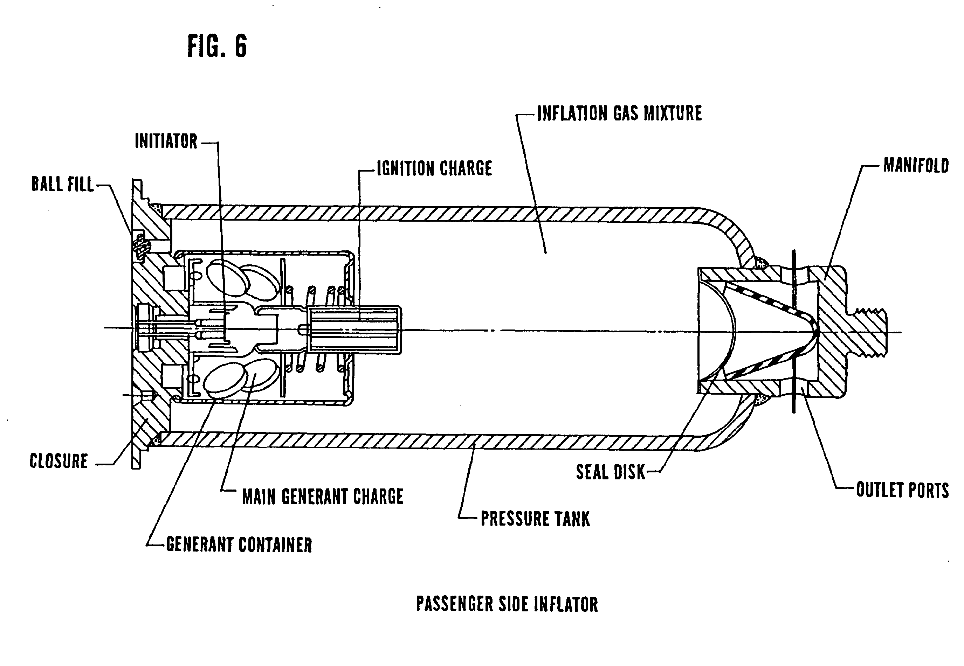

In Fig. 6, conventional apparatus for use in the generation of gas to inflate an automotive vehicle air bag is depicted. As is readily seen from the drawing, the outlet ports are provided at the extreme right of the device.

The following formulations within the scope of the instant invention provide very good results:

### Example 1

47% by weight guanidine nitrate;
47% by weight ammonium nitrate;
3% by weight potassium nitrate; and
3% by weight zinc oxide

### Example 2

47.5% by weight guanidine nitrate;
47.5% by weight ammonium nitrate; and
5% by weight zinc oxide

### Example 3

31.3% by weight guanidine nitrate;
54.2% by weight ammonium nitrate;
9.5% by weight potassium nitrate; and
5% by weight polyvinyl alcohol

### Example 4

40% by weight guanidine nitrate;
53.5% by weight ammonium nitrate;
1.5% by weight potassium nitrate; and
5% by weight polyvinyl alcohol.

The most preferred formulations, based upon present testing, are those of Examples 3 and 4. However, it is contemplated that other formulations containing the disclosed eutectic composition, together with one or both stabilizers and optionally a binder, such as polyvinyl alcohol binder, will also prove to be of equivalent efficacy. Likewise, corresponding results are expected from compositions in which guanidine nitrate is replaced with a counterpart amount of aminoguanidine nitrate.

## Claims

1. A composition for generating a substantially particulate-free, non-toxic, odourless and colorless gas comprising:
a solid eutectic solution of ammonium nitrate and either aminoguanidine nitrate or guanidine nitrate, together with a minor amount of potassium nitrate, a polyvinyl alcohol binder and an amount of zinc oxide up to 5% by weight.

2. The composition of claim 1 wherein the mixture comprises equal parts by weight of ammonium nitrate and either aminoguanidine nitrate or guanidine nitrate.

3. The composition of claim 1 wherein the mixture comprises 40% to 60% by weight of ammonium nitrate and 40% to 60% by weight of either aminoguanidine nitrate or guanidine nitrate.

4. The composition of claim 1 wherein the amount of potassium nitrate present is up to 10% by weight.

5. The composition of claim 4 wherein the potassium nitrate is present in the range about 1 to about 2% by weight.

6. The composition of claim 1, which is suitable for making pressed pellets which are resistant to cracking when subjected to temperature cycling.

7. The composition according to claim 1, comprising equal parts of guanidine nitrate and ammonium nitrate and equal parts of potassium nitrate and zinc oxide.

8. The composition for generating a particulate-free, non-toxic, odourless and colorless gas consisting of a solid eutectic solution of:
a. 47% by weight guanidine nitrate;
b. 47% by weight ammonium nitrate;
c. 3% by weight potassium nitrate; and
d. 3% by weight zinc oxide.

9. A composition for generating a particulate-free, non-toxic, odourless and colorless gas consisting of a solid eutectic solution of:
a. 47.5% by weight guanidine nitrate;
b. 47.5% by weight ammonium nitrate; and
c. 5% by weight zinc oxide.

10. A composition for generating a particulate-free, non-toxic, odorless and colorless gas consisting of a solid eutectic solution of:
a. 31.3% by weight guanidine nitrate;
b. 54.2% by weight ammonium nitrate;
c. 9.5% by weight potassium nitrate; and
d. 5% by weight polyvinyl alcohol.

11. A composition for generating a particulate-free, non-toxic, odorless and colorless gas consisting of a solid eutectic solution of:
a. 40% by weight guanidine nitrate;
b. 53.5% by weight ammonium nitrate;
c. 1.5% by weight potassium nitrate; and
d. 5% by weight polyvinyl alcohol.

12. A method of generating a particulate-free, non-toxic, odorless and colorless gas comprising the steps:
a. providing an enclosed pressure chamber having an exit port,
b. disposing within said chamber, a solid eutectic solution comprising ammonium nitrate and either aminoguanidine nitrate or guanidine nitrate, and
c. providing means for igniting said solid eutectic solution upon detection of the pressure chamber being subjected to a sudden deceleration, whereby gas is instantly generated and conducted through the exit port of said pressure chamber,
wherein the solid eutectic solution also includes an amount of potassium nitrate up to 10% by weight, and an amount of zinc oxide up to 5% by weight.

13. The method of claim 12, conducted in an automotive vehicle equipped with at least one air bag, wherein the generated gas, conducted through the exit port, thereafter enters said air bag, which it instantly inflates.

14. The method of claim 12 wherein the potassium nitrate is present in the range of about 1 to about 2% by weight.

15. The method of claim 12 wherein the solid eutectic solution is present in the form of a pressed pellet which is resistant to cracking when subjected to temperature cycling.

16. The method of claim 12 wherein the means for igniting the eutectic propellant solution comprises an effective amount of a solid eutectic solution of essentially the same components.

17. The method of claim 14 wherein the means for igniting the eutectic propellant solution comprises an effective amount of a solid eutectic solution of essentially the same components.

18. The method of claim 12 also including a polyvinyl alcohol binder.

19. The method of claim 12 wherein the solid eutectic solution consists of:
a. 47% by weight guanidine nitrate;
b. 47% by weight ammonium nitrate;
c. 3% by weight potassium nitrate; and
d. 3% by weight zinc oxide.

20. A method of generating a particulate-free, non-toxic, odorless and colorless gas comprising the steps:
a. providing an enclosed pressure chamber having an exit port,
b. disposing within said chamber, a solid eutectic solution comprising ammonium nitrate and either aminoguanidine nitrate or guanidine nitrate, and
c. providing means for igniting said eutectic solution upon detection of the pressure chamber being subjected to a sudden deceleration, whereby gas is instantly generated and conducted through the exit port of said pressure chamber,
wherein the solid eutectic solution consists of:
a. 47.5% by weight guanidine nitrate;
b. 47.5% by weight ammonium nitrate; and
c. 5% by weight zinc oxide.

21. A method of generating a particulate-free, non-toxic, odorless and colorless gas comprising the steps:
a. providing an enclosed pressure chamber having an exit port,
b. disposing within said chamber, a solid eutectic solution comprising ammonium nitrate and either amino guanidine nitrate or guanidine nitrate, and
c. providing means for igniting said eutectic solution upon detection of the pressure chamber being subjected to a sudden deceleration, whereby gas is instantly generated and conducted through the exit port of said pressure chamber,
wherein the solid eutectic solution consists of:
a. 31.3% by weight guanidine nitrate;
b. 54.2% by weight ammonium nitrate;
c. 9.5% by weight potassium nitrate; and
d. 5% by weight polyvinyl alcohol.

22. A method of generating a particulate-free, non-toxic, odorless and colorless gas comprising the steps:
a. providing an enclosed pressure chamber having an exit port,
b. disposing within said chamber, a solid eutectic solution comprising ammonium nitrate and either amino guanidine nitrate or guanidine nitrate, and
c. providing means for igniting said eutectic solution upon detection of the pressure chamber being subjected to a sudden deceleration, whereby gas is instantly generated and conducted through the exit port of said pressure chamber,
wherein the solid eutectic solution consists of:
a. 40% by weight guanidine nitrate;
b. 53.5% by weight ammonium nitrate;
c. 1.5% by weight potassium nitrate; and
d. 5% by weight polyvinyl alcohol.

## Patentansprüche

1. Zusammensetzung zur Erzeugung eines im Wesentlichen partikelfreien, nichttoxischen, geruchslosen und farblosen Gases, umfassend:
eine feste eutektische Lösung aus Ammoniumnitrat und entweder Aminoguanidinnitrat oder Guanidinnitrat, zusammen mit einer geringfügigen Menge von Kaliumnitrat, einem Polyvinylalkoholbinder und einer Menge von Zinkoxid von bis zu 5 Gewichts-%.

2. Zusammensetzung nach Anspruch 1, wobei das Gemisch gleiche Gewichtsanteile von Ammoniumnitrat und entweder Aminoguanidinnitrat oder Guanidinnitrat umfasst.

3. Zusammensetzung nach Anspruch 1, wobei das Gemisch 40 Gewichts-% bis 60 Gewichts-% von Ammoniumnitrat und entweder 40 Gewichts-% bis 60 Gewichts-% von Aminoguanidinnitrat oder Guanidinnitrat umfasst.

4. Zusammensetzung nach Anspruch 1, wobei die Menge von vorhandenem Kaliumnitrat bis zu 10 Gewichts-% beträgt.

5. Zusammensetzug nach Anspruch 4, wobei das Kaliumnitrat im Bereich von etwa 1 bis etwa 2 Gewichts-% vorhanden ist.

6. Zusammensetzung nach Anspruch 1, welche zur Herstellung von gepressten Pellets geeignet ist, welche berstfest sind, wenn sie Temperaturwechsel ausgesetzt sind.

7. Zusammensetzung nach Anspruch 1, umfassend gleiche Anteile von Guanidinnitrat und Ammoniumnitrat und gleiche Anteile von Kaliumnitrat und Zinkoxid.

8. Zusammensetzung zur Erzeugung eines partikelfreien, nichttoxischen, geruchslosen und farblosen Gases bestehend aus einer festen eutektischen Lösung aus:
a. 47 Gewichts-% Guanidinnitrat;
b. 47 Gewichts-% Ammoniumnitrat;
c. 3 Gewichts-% Kaliumnitrat; und
d. 3 Gewichts-% Zinkoxid.

9. Zusammensetzung zur Erzeugung eines partikelfreien, nichttoxischen, geruchslosen und farblosen Gases bestehend aus einer festen eutektischen Lösung aus:
a. 47,5 Gewichts-% Guanidinnitrat;
b. 47,5 Gewichts-% Ammoniumnitrat; und
c. 5 Gewichts-% Zinkoxid.

10. Zusammensetzung zur Erzeugung eines partikelfreien, nichttoxischen, geruchslosen und farblosen Gases bestehend aus einer festen eutektischen Lösung aus:
a. 31,3 Gewichts-% Guanidinnitrat;
b. 54,2 Gewichts-% Ammoniumnitrat;
c. 9,5 Gewichts-% Kaliumnitrat; und
d. 5 Gewichts-% Zinkoxid.

11. Zusammensetzung zur Erzeugung eines partikelfreien, nichttoxischen, geruchslosen und farblosen Gases bestehend aus einer festen eutektischen Lösung aus:
a. 40 Gewichts-% Guanidinnitrat;
b. 53,5 Gewichts-% Ammoniumnitrat;
c. 1,5 Gewichts-% Kaliumnitrat; und
d. 5 Gewichts-% Zinkoxid.

12. Verfahren zur Herstellung eines partikelfreien, nichttoxischen, geruchslosen und farblosen Gases, umfassend die folgenden Schritte:
a. Bereitstellen einer geschlossenen Druckkammer mit einer Auslassöffnung,
b. Anordnen innerhalb der Kammer einer festen eutektischen Lösung, die Ammoniumnitrat und entweder Aminoguanidinnitrat oder Guanidinnitrat umfasst, und
c. Bereitstellen von Mitteln zum Zünden der festen eutektischen Lösung bei Erkennung, dass die Druckkammer einer plötzlichen Verzögerung unterzogen wird, wodurch augenblicklich Gas erzeugt und durch die Auslassöffnung der Druckkammer geleitet wird;
wobei die feste eutektische Lösung außerdem eine Menge von Kaliumnitrat von bis zu 10 Gewichts-% und eine Menge von Zinkoxid von bis zu 5 Gewichts-% umfasst.

13. Verfahren nach Anspruch 12, durchgeführt in einem Kraftfahrzeug, das mit wenigstens einem Airbag ausgestattet ist, wobei das erzeugte Gas durch die Auslassöffnung geführt wird und danach in den Airbag eintritt, welchen es augenblicklich aufbläht.

14. Verfahren nach Anspruch 12, wobei das Kaliumnitrat im Bereich von etwa 1 bis etwa 2 Gewichts-% vorhanden ist.

15. Verfahren nach Anspruch 12, wobei die feste eutektische Lösung in der Form eines gepressten Pellets vorhanden ist, welches berstfest ist, wenn es Temperaturwechsel ausgesetzt ist.

16. Verfahren nach Anspruch 12, wobei das Mittel zum Zünden der eutektischen Treibgaslösung eine wirksame Menge einer festen eutektischen Lösung von im Wesentlichen denselben Komponenten umfasst.

17. Verfahren nach Anspruch 14, wobei das Mittel zum Zünden der eutektischen Treibgaslösung eine wirksame Menge einer festen eutektischen Lösung von im Wesentlichen denselben Komponenten umfasst.

18. Verfahren nach Anspruch 12, außerdem umfassend einen Polyvinylalkoholbinder.

19. Verfahren nach Anspruch 12, wobei die feste eutektische Lösung besteht aus:
a. 47 Gewichts-% Guanidinnitrat;
b. 47 Gewichts-% Ammoniumnitrat;
c. 3 Gewichts-% Kaliumnitrat; und
d. 3 Gewichts-% Zinkoxid.

20. Verfahren zum Erzeugen eines partikelfreien, nichttoxischen, geruchslosen und farblosen Gases, umfassend die folgenden Schritte:
a. Bereitstellen einer geschlossenen Druckkammer mit einer Auslassöffnung,
b. Anordnen innerhalb der Kammer einer festen eutektischen Lösung, die Ammoniumnitrat und entweder Aminoguanidinnitrat oder Guanidinnitrat umfasst, und
c. Bereitstellen von Mitteln zum Zünden der festen eutektischen Lösung bei Erkennung, dass die Druckkammer einer plötzlichen Verzögerung unterzogen wird, wodurch augenblicklich Gas erzeugt und durch die Auslassöffnung der Druckkammer geleitet wird;
wobei die feste eutektische Lösung besteht aus:
a. 47,5 Gewichts-% Guanidinnitrat;
b. 47,5 Gewichts-% Ammoniumnitrat; und
c. 5 Gewichts-% Zinkoxid.

21. Verfahren zum Erzeugen eines partikelfreien, nichttoxischen, geruchslosen und farblosen Gases, umfassend die folgenden Schritte:
a. Bereitstellen einer geschlossenen Druckkammer mit einer Auslassöffnung,
b. Anordnen innerhalb der Kammer einer festen eutektischen Lösung, die Ammoniumnitrat und entweder Aminoguanidinnitrat oder Guanidinnitrat umfasst, und
c. Bereitstellen von Mitteln zum Zünden der festen eutektischen Lösung bei Erkennung, dass die Druckkammer einer plötzlichen Verzögerung unterzogen wird, wodurch augenblicklich Gas erzeugt und durch die Auslassöffnung der Druckkammer geleitet wird;
wobei die feste eutektische Lösung besteht aus:
a. 31,3 Gewichts-% Guanidinnitrat;
b. 54,2 Gewichts-% Ammoniumnitrat;
c. 9,5 Gewichts-% Kaliumnitrat; und
d. 5 Gewichts-% Zinkoxid.

22. Verfahren zum Erzeugen eines partikelfreien, nichttoxischen, geruchslosen und farblosen Gases, umfassend die folgenden Schritte:
a. Bereitstellen einer geschlossenen Druckkammer mit einer Auslassöffnung,
b. Anordnen innerhalb der Kammer einer festen eutektischen Lösung, die Ammoniumnitrat und entweder Aminoguanidinnitrat oder Guanidinnitrat umfasst, und
c. Bereitstellen von Mitteln zum Zünden der festen eutektischen Lösung bei Erkennung, dass die Druckkammer einer plötzlichen Verzögerung unterzogen wird, wodurch augenblicklich Gas erzeugt und durch die Auslassöffnung der Druckkammer geleitet wird;
wobei die feste eutektische Lösung besteht aus:
a. 40 Gewichts-% Guanidinnitrat;
b. 53,5 Gewichts-% Ammoniumnitrat;
c. 1,5 Gewichts-% Kaliumnitrat; und
d. 5 Gewichts-% Zinkoxid.

## Revendications

1. Composition pour générer un gaz inodore, incolore, non toxique et sensiblement dépourvu de particules, comprenant :
une solution eutectique solide de nitrate d'ammonium et soit de nitrate d'aminoguanidine, soit de nitrate de guanidine, conjointement à une quantité mineure de nitrate de potassium, un liant d'alcool polyvinylique et une quantité d'oxyde de zinc allant jusqu'à 5 % en poids.

2. Composition selon la revendication 1, dans laquelle le mélange comprend des parties égales en poids de nitrate d'ammonium et soit de nitrate d'aminoguanidine, soit de nitrate de guanidine.

3. Composition selon la revendication 1, dans laquelle le mélange comprend 40 % à 60 % de nitrate d'ammonium et 40 à 60 % en poids soit de nitrate d'aminoguanidine, soit de nitrate de guanidine.

4. Composition selon la revendication 1, dans laquelle la quantité de nitrate de potassium présent va jusqu'à 10 % en poids.

5. Composition selon la revendication 4, dans laquelle le nitrate de potassium est présent dans la plage d'environ 1 à environ 2 % en poids.

6. Composition selon la revendication 1, qui est appropriée pour la fabrication de pastilles pressées qui sont résistantes au fissurage lorsqu'elles sont soumises à un cycle de température.

7. Composition selon la revendication 1, comprenant des parties égales de nitrate de guanidine et de nitrate d'ammonium et des parties égales de nitrate de potassium et d'oxyde de zinc.

8. Composition pour générer un gaz inodore, incolore, non toxique et dépourvu de particules, consistant en une solution eutectique solide de :
a. 47 % en poids de nitrate de guanidine ;
b. 47 % en poids de nitrate d'ammonium ;
c. 3 % en poids de nitrate de potassium ; et
d. 3 % en poids d'oxyde de zinc.

9. Composition pour générer un gaz inodore, incolore, non toxique et dépourvu de particules, consistant en une solution eutectique solide de :
a. 47,5 % en poids de nitrate de guanidine ;
b. 47,5 % en poids de nitrate d'ammonium ; et
c. 5 % en poids d'oxyde de zinc.

10. Composition pour générer un gaz inodore, incolore, non toxique et dépourvu de particules, consistant en une solution eutectique solide de :
a. 31,3 % en poids de nitrate de guanidine ;
b. 54,2 % en poids de nitrate d'ammonium ;
c. 9,5 % en poids de nitrate de potassium ; et
d. 5 % en poids d'alcool polyvinylique.

11. Composition pour générer un gaz inodore, incolore, non toxique et dépourvu de particules, consistant en une solution eutectique solide de :
a. 40 % en poids de nitrate de guanidine ;
b. 53,5 % en poids de nitrate d'ammonium ;
c. 1,5 % en poids de nitrate de potassium ; et
d. 5 % en poids d'alcool polyvinylique.

12. Procédé de génération d'un gaz inodore, incolore, non toxique et dépourvu de particules, comprenant les étapes consistant à :
a. fournir une chambre de pression fermée comportant un orifice de sortie,
b. disposer dans ladite chambre, une solution eutectique solide comprenant du nitrate d'ammonium et soit du nitrate d'aminoguanidine, soit du nitrate de guanidine, et
c. fournir un moyen d'inflammation de ladite solution eutectique solide lors de la détection d'une soudaine décélération de la chambre de pression, moyennant quoi du gaz est instantanément généré et conduit à travers l'orifice de sortie de ladite chambre de pression,
dans lequel la solution eutectique solide comprend également une quantité de nitrate de potassium allant jusqu'à 10 % en poids, et une quantité d'oxyde de zinc allant jusqu'à 5 % en poids.

13. Procédé selon la revendication 12, conduit dans un véhicule automobile équipé d'au moins un coussin de sécurité gonflable, dans lequel le gaz généré, conduit à travers l'orifice de sortie, pénètre ensuite dans ledit coussin de sécurité gonflable, qui se gonfle instantanément.

14. Procédé selon la revendication 12, dans lequel le nitrate de potassium est présent dans la plage d'environ 1 à environ 2 % en poids.

15. Procédé selon la revendication 12, dans lequel la solution eutectique solide est présente sous la forme d'une pastille pressée qui est résistante au fissurage lorsqu'elle est soumise à un cycle de température.

16. Procédé selon la revendication 12, dans lequel le moyen d'inflammation de la solution de propulsion eutectique comprend une quantité efficace d'une solution eutectique solide essentiellement des mêmes composants.

17. Procédé selon la revendication 14, dans lequel le moyen d'inflammation de la solution de propulsion eutectique comprend une quantité efficace d'une solution eutectique solide essentiellement des mêmes composants.

18. Procédé selon la revendication 12, comprenant également un liant d'alcool polyvinylique.

19. Procédé selon la revendication 12, dans lequel la solution eutectique solide consiste en :
a. 47 % en poids de nitrate de guanidine ;
b. 47 % en poids de nitrate d'ammonium ;
c. 3 % en poids de nitrate de potassium ; et
d. 3 % en poids d'oxyde de zinc.

20. Procédé de génération d'un gaz inodore, incolore, non toxique et dépourvu de particules, comprenant les étapes consistant à :
a. fournir une chambre de pression fermée comportant un orifice de sortie,
b. disposer dans ladite chambre une solution eutectique solide comprenant du nitrate d'ammonium et soit du nitrate d'aminoguanidine, soit du nitrate de guanidine, et
c. fournir des moyens d'inflammation de ladite solution eutectique solide lors de la détection d'une soudaine décélération de la chambre de pression, moyennant quoi du gaz est instantanément généré et conduit à travers l'orifice de sortie de ladite chambre de pression,
dans lequel la solution eutectique solide consiste en :
a. 47,5 % en poids de nitrate de guanidine ;
b. 47,5 % en poids de nitrate d'ammonium ; et
c. 5 % en poids d'oxyde de zinc.

21. Procédé de génération d'un gaz inodore, incolore, non toxique et dépourvu de particules, comprenant les étapes consistant à :
a. fournir une chambre de pression fermée comportant un orifice de sortie,
b. disposer dans ladite chambre, une solution eutectique solide comprenant du nitrate d'ammonium et soit du nitrate d'aminoguanidine, soit du nitrate de guanidine, et
c. fournir un moyen d'inflammation de ladite solution eutectique solide lors de la détection d'une soudaine décélération de la chambre de pression, moyennant quoi du gaz est instantanément généré et conduit à travers l'orifice de sortie de ladite chambre de pression,
dans lequel la solution eutectique solide consiste en :
a. 31,3 % en poids de nitrate de guanidine ;
b. 54,2 % en poids de nitrate d'ammonium ;
c. 9,5 % en poids de nitrate de potassium ; et
d. 5 % en poids d'alcool polyvinylique.

22. Procédé de génération d'un gaz inodore, incolore, non toxique et dépourvu de particules, comprenant les étapes consistant à :
a. fournir une chambre de pression fermée comportant un orifice de sortie,
b. disposer dans ladite chambre, une solution eutectique solide comprenant du nitrate d'ammonium et soit du nitrate d'aminoguanidine, soit du nitrate de guanidine, et
c. fournir un moyen d'inflammation de ladite solution eutectique solide lors de la détection d'une soudaine décélération de la chambre de pression, moyennant quoi du gaz est instantanément généré et conduit à travers l'orifice de sortie de ladite chambre de pression,
dans lequel la solution eutectique solide consiste en :
a. 40 % en poids de nitrate de guanidine ;
b. 53,5 % en poids de nitrate d'ammonium ;
c. 1,5 % en poids de nitrate de potassium ; et
d. 5 % en poids de poly(alcool vinylique).
